# EUROPEAN PATENT APPLICATION

(11) **EP 1 112 986 A1**
(43) Date of publication of application: **04.07.2001**
(21) Application number: 00128222.7
(22) Date of filing: 22.12.2000
(51) Int. Cl.: C04B 28/14, C04B 24/42

(54) **Application of polymethylhydrogen siloxane for producing a water resistant gypsum product and gypsum/wood fiber board and gypsum board**

(30) Priority: 30.12.1999 US 476740
(71) Applicant: UNITED STATES GYPSUM COMPANY, Chicago, Illinois 60606 (US)
(72) Inventor: Mao, Zhuoxiong, Arlington Heights, Illinois 60004 (US)
(74) Representative: Müller-Boré & Partner Patentanwälte

(57) **Abstract**

The present invention discloses a method of increasing the water resistance of a gypsum containing material by including a polymerizable siloxane and Portland Cement as a catalyst in a gypsum slurry, which is then shaped and dried under conditions to promote the polymerization of the siloxane into silicone. The invention also discloses a method of increasing the water resistance of a gypsum containing material by including a polymerizable siloxane and Portland Cement as a catalyst in a hot calcined gypsum slurry that contains host fibers, which is then shaped, dewatered pressed and dryed under conditions to promote the polymerization of the siloxane into silicone.

## Description

The present invention relates to an improved water resistant gypsum material; more particularly to a composite gypsum/cellulose fiber material having improved water resistance which is especially useful for making building products. The present invention relates more specifically to a silicone impregnated gypsum/wood fiber building board having enhanced water resistance through the addition of siloxane and Portland Cement to the gypsum and wood fiber during the board manufacturing process.

The present invention broadly contemplates improving the water resistance of gypsum containing materials by adding a polymerizable siloxane, alone or in the form of a stable emulsion, and Portland cement as a catalyst, to a calcined gypsum slurry, which is then shaped, and dried under conditions which promote the polymerization of the siloxane to form a highly cross-linked silicone resin. The gypsum slurry may contain other strength enhancing materials such as cellulosic fibers. The resultant dried material may be used to form boards or any other desired shaped material. The present invention also contemplates improving the manufacture of water resistant gypsum containing materials by using Portland cement as a catalyst for the polymerization of the siloxane, instead of using more difficult to handle amines as currently taught by the prior art.

Certain properties of gypsum (calcium sulfate dihydrate) make it very popular for use in making industrial and building products, especially gypsum wallboard. It is a plentiful and generally inexpensive raw material which, through a process of dehydration and rehydration, can be cast, molded, or otherwise formed into useful shapes. It is also noncombustible and relatively dimensionally stable when exposed to moisture. However, because it is a brittle, crystalline material which has relatively low tensile and flexural strength, its uses are typically limited to non-structural, non-load bearing and non-impact absorbing applications.

Gypsum wallboard; i.e., also known as plasterboard or drywall, consists of a rehydrated gypsum core sandwiched between multi-ply paper cover sheets, and is used largely for interior wall and ceiling applications. Because of the brittleness and low nail and screw holding properties of its gypsum core, conventional drywall by itself cannot support heavy appended loads or absorb significant impact. Accordingly, it has been desirable to add other strengths enhancing materials such as lignocellular fibers. Additionally, gypsum wallboard can lose its strength when exposed to moisture. Therefore, means to improve the moisture resistance of gypsum wallboard have also been sought.

Another readily available and affordable material, which is also widely used in building products, is lignocellulosic material, particularly in the form of wood and paper fibers. For example, in addition to lumber, particleboard, fiberboard, waferboard, plywood and "hard" board (high density fiberboard) are some of the forms of processed lignocellulosic material products used in the building industry. Such materials have better tensile and flexural strength than gypsum wallboard. However, they are also generally higher in cost, have poor fire resistance and are frequently susceptible to swelling or warping when exposed to moisture. Therefore, affordable means to improve upon these use limiting properties of building products made from cellulosic material are also desired.

Previous attempts to combine the favorable properties of gypsum and cellulosic fibers, particularly lignocellulosic or wood fibers, are described in detail in U.S. Patent Nos. 5,817,262 and 5,320,677, both herein incorporated by reference, and assigned to the United States Gypsum Company. In the '262 patent, the water resistance of the product was improved by the addition of a siloxane emulsion which cures into silicone in the core material. In that invention, an aliphatic diamine was used as a catalyst for the polymerization of siloxane to silicone. Aliphatic diamine is expensive relative to Portland Cement, and difficult to use in a production facility because of emitted vapors. In researching ways to overcome the difficulties of the prior art, the inventor discovered that less volatile and less expensive Portland Cement, a catalyst not suggested by the prior art, can be used to catalyze the polymerization of siloxane.

The hydrogen methyl siloxane used in the invention is cross-linked to form a silicone network in the material matrix to impart the desired uniform water resistance to the gypsum material. The material can be any gypsum product, such as gypsum wallboard or a GWF board incorporating cellulosic fiber as well as gypsum, in the board core. Polymethylhydrogen siloxane, the hydrogen methyl siloxane of choice for the reaction, reacts with water to form a cross-linked silicone network, but the reaction is slow. In the case of a GWF board, the reaction will not be completed in the time it takes to complete the GWF process. Thus, simply adding siloxane into GWF slurry will not impart the desired water resistance to the GWF matrix. The timing of the reaction must be controlled with catalysts and other additives such as accelerators so that the cross-linking reaction will be completed in the time it takes to form and dry the board. This timing of the reaction will vary depending upon the product produced. For the GWF process, the time is approximately 40 minutes. For a gypsum board, the time can be as short as seven minutes.

The polymerization of siloxane to silicone requires water as a reagent. During the drying of a board, free water is removed, thereby reducing the water available for the reaction. Therefore, unreacted siloxane will not continue the cross-linking reaction after the board is completely dried. If the cross linking reaction is too slow, and the processing time of the board too short, the siloxane will not polymerize. Difficulties will also arise if the reaction occurs too quickly. If the siloxane begins to cross-link during its feeding into the slurry, a gel type silicone will form which is difficult to further uniformly disperse into the whole slurry, and hence the matrix of material. Additionally, if the polymerization reaction is completed before the rehydration of the hemihydrate is completed, the surface of the hemihydrate crystals will be blocked from contacting water needed for continuation of rehydration, causing a decrease in the strength of the material. Control of the cross-linking time to match the process time is the key to the success of this invention.

Besides being environmentally friendly and easier to work with, the Portland Cement catalyst of the present invention also has other advantages. The use of Portland Cement as the catalyst, instead of an aliphatic diamine such as DA-17 from Tomah, as taught in the '262 patent, also improves the water resistance of the resultant GWF board over the board disclosed in the '262 patent. Additionally, the Portland Cement only slightly dissolves in water, thus it can be easily retained in the forming mat during the GWF process because it is not dissolved into the water and drawn out of the basemat along with the water during dewatering. Portland Cement is also less expensive than DA-17.

The '262 patent also teaches emulsifying the siloxane prior to adding it to the slurry. In developing the present invention, it has also been found that the siloxane may be added to the slurry without an emulsifier. In general, siloxane must be uniformly dispersed in the slurry before the board forming stage in order to achieve the desired water resistance. If agitation of the slurry is strong enough to break siloxane into fine droplets while it is in the slurry, emulsion is not necessary. This emulsion free method is applicable not only to the preparation of the GWF product, but also to the preparation of gypsum containing products that do not incorporate host particles such as wood fibers. Producing a product without using an emulsifier is less expensive and eliminates a step in the manufacturing process. However, an aqueous emulsion of siloxane is the preferred way to add siloxane into the slurry if maximum water resistance is desired.

In general and as taught by the 262 and '677 patents, the process for making a composite GWF material begins with mixing between about 0.5% to about 30%, and preferably between 3% to 20%, by weight, wood fibers with the respective complement of ground, uncalcined gypsum. The dry mix is combined with enough liquid, preferably water, to form a dilute slurry having about 70%-95% by weight water. The slurry is processed in a pressure vessel, such as an autoclave, at a temperature of approximately 285 to 305 degrees F, which is sufficient to convert the gypsum to acicular calcium sulfate hemihydrate crystals. It is desirable to continuously agitate the slurry with gentle stirring or mixing to break up any fiber clumps and keep all the particles in suspension. After the hemihydrate has formed and has precipitated out of solution as hemihydrate crystals, the pressure on the product slurry is relieved when the slurry is discharged from the autoclave. It is at this point that any other desired additives are added to the slurry. While still hot, the slurry is introduced into a headbox which distributes the slurry onto a porous felting conveyor. While on the conveyor, the slurry is dewatered by the action of vacuum pumps which draw the water through the felting conveyor, causing a filter cake to form on the conveyor's surface. As much as 90% of the uncombined water may be removed from the filter cake by vacuum pumps. The temperature of the heated slurry is maintained at a temperature above about 160° F until it has been substantially dewatered and wet pressed into a board. As a consequence of the water removal, the filter cake is cooled to a temperature at which point rehydration may begin. However, it may still be necessary to provide external cooling to bring the temperature low enough to accomplish the rehydration within an acceptable time.

Before extensive rehydration takes place, the filter cake is preferably wet-pressed into a board of desired thickness and/or density. If the board is to be given a special surface texture or a laminated surface finish, it would preferably occur during or following this step of the process. During the wet pressing, which preferably takes place with gradually increasing pressure to preserve the product's integrity, two things happen: (1) additional water, for example about 50%-60% of the remaining water, is removed; and (2) as a consequence of the additional water removal, the filter cake is further cooled to a temperature at which rapid rehydration occurs. The calcium sulfate hemihydrate hydrates to gypsum, so that the acicular calcium hemihydrate crystals are converted to gypsum crystals in-situ in and around the wood fibers. After rehydration is complete, the boards can be cut and trimmed, if desired, and then sent through a kiln for drying. Preferably, the drying temperature should be kept low enough to avoid recalcining any gypsum on the surface.

For the GWF product, the siloxane and emulsion must be stable in headbox temperatures of 180° to 200°F. The headbox environment also has Ca⁺² ions from the gypsum, and may have K⁺¹ and Al⁺³ ions present, depending on the additives used. The survivability of the siloxane, Portland Cement, and emulsion in the harsh environment, as well as its survivability remaining in the basemat during the physical dewatering process is key to the success of the invention. If a board product is desired, the siloxane must be adapted to cure at the core temperature achieved by the board during the final drying of the product. More importantly, the siloxane, emulsifier and the Portland Cement not only must be stable in the presence of the various additives which are used to regulate the crystallization of the hemihydrate, and the various accelerators or retarders which are used to adjust the process by which the rehydration of the gypsum occurs, but the siloxane emulsion and the catalyst must not interfere with the operation of those additives. As a result, potash (potassium sulfate) and zinc sulfate are preferred as the accelerators over alum.

It has been found that certain additives, such as the particular accelerator ZnSO₄ (zinc sulfate) (to speed the hydration of the calcium sulfate hemihydrate to gypsum) may markedly affect the level of improvement in water resistance achieved by the siloxane or siloxane emulsion. Most importantly, a high proportion of the siloxane and catalyst must adhere to the particles, whether the particles are gypsum or other particles such as wood fiber, during the process by which the slurry is dewatered to remove most of the water and form a filter cake. A high adherence will avoid the loss of the siloxane and Portland Cement within the water removed from the slurry.

A composite GWF board made according to the foregoing process offers improved water resistance, as well as the synergistic combination with the desirable features inherently offered by the prior art boards, e.g. the boards made by the process of U.S. Patent No. 5,817,262. Because the board of the present invention has improved water resistance, it also offers improved strength, including nail and screw pull-out resistance, over conventional plasterboard and prior art gypsum/wood-fiber boards. Moreover, it can be produced over a range of densities and thicknesses.

In developing the improved water resistant GWF product, it was also discovered that the use of siloxane and Portland Cement can also be employed to improve the water resistance of a gypsum product which does not include cellulosic fibers in the core of material.

In general, and as is well known in the art, a gypsum containing product, such as gypsum wall board, is prepared by mixing calcined gypsum hemihydrate with sufficient liquid to form a slurry. With further processing, the slurry is formed into a desired shape, and allowed to rehydrate to gypsum dihydrate.

The siloxane is added to the hemihydrate containing slurry prior to, or just as the crystals rehydrate. As is known in the art, it is also possible to mix the dry components such as the hemihydrate and accelerators and then add siloxane mixed with water and a foaming agent, and emulsifier if desired. As discussed in reference to the GWF product, the siloxane must be stable in the environment in which it is introduced. Thus, it must be stable at the temperature it is added, which may be room temperature if the hemidhydrate crystals are stored and put in solution just prior to processing, or the temperature may be higher where the crystals are processed immediately upon exiting the autoclave. It must also be stable in the electrolytic environment, which may differ from the GWF environment due to different additives, although potash and zinc sulfate may used. Often, a foaming agent is also introduced. The slurry is then shaped and dried under conditions that will promote the polymerization of siloxane to silicone.

It is a principal objective of the present invention to provide a gypsum building material having improved water resistance, and having a silicone polymer dispersed throughout said material, to provide building products which have improved resistance to water and other forms of moisture.

It is a related objective to provide a process for producing such a gypsum material wherein siloxane and a Portland Cement catalyst adapted to cure said siloxane, is added to a slurry of calcium sulfate hemihydrate wherein said siloxane-containing slurry is passed onto a forming surface to form a desired shape which is further processed to provide the gypsum product. It is an object of this invention to produce a gypsum product with a maximized water resistance by adding the siloxane as an aqueous emulsion.

It is an object of this invention to produce a gypsum containing water-resistant material without using hazardous chemicals such as aliphatic diamines.

It is an object of present invention to improve upon the teachings of the '262 patent, and provide a gypsum-wood fiber board product having the strength and dimensional stability of the type of product described in the '262 patent and having greater water resistance. It is also an object of the invention to improve the water resistance of wallboard that uses only gypsum instead of gypsum-wood fiber as the core material. The greater water resistance is achieved by judiciously selecting the amounts of siloxane, Portland Cement as a catalyst, and other accelerators to promote the polymerization or curing of the hydrogen methyl siloxane to a silicone polymer.

The broad objective of the invention is realized by adding water, a siloxane, Portland Cement, calcium sulfate hemihydrate, and accelerators to create a dilute slurry, and forming said slurry into a desired shape before the hemihydrate is completely rehydrated to gypsum. More specific objectives are realized, according to the invention, by adding a siloxane and Portland Cement to a dilute heated slurry of calcium sulfate hemihydrate and host particles of a stronger material, passing the heated slurry onto a porous flat forming surface to form a filter cake which is dewatered and pressed to form a board before the hemihydrate is completely rehydrated to gypsum. The objective of maximum water resistance is most preferably realized, according to the invention, by adding a siloxane, a stable emulsifier, and Portland Cement as a catalyst, to a hot dilute slurry of a calcium sulfate material which has been calcined under conditions that produce acicular alpha hemihydrate crystals in and about the voids of host particles of a stronger material, and then passing the slurry to a porous flat forming surface to form a filter cake which is dewatered with minimal loss of the siloxane and Portland Cement. The filter cake is pressed to form a board before the hemihydrate completely rehydrates to gypsum, after which the board is dried under conditions that cure the siloxane within the board. It has been found the addition of the siloxane and Portland Cement to the slurry improves the water resistance of the GWF board even greater than the product described in the '262 patent.

The term gypsum, as used herein, means calcium sulfate in the stable dihydrate state, i.e., CaSO₄.2H₂O, and includes the naturally occurring mineral, the synthetically derived equivalents, and the dihydrate material formed by the hydration of calcium sulfate hemihydrate (stucco) or anhydrite. The term "calcium sulfate material", as used herein, means calcium sulfate in any of its forms, namely calcium sulfate anhydrite, calcium sulfate hemihydrate, calcium sulfate dihydrate and mixtures thereof.

The term "host particles" is meant to cover any macroscopic particle, such as a fiber, chip or flake of a substance other than gypsum. The particle, which is generally insoluble in the slurry liquid, should also have accessible voids therein; whether pits, cracks, fissures, hollow cores or other surface imperfections, which are penetrable by the slurry menstruum and within which calcium sulfate dihydrate crystals can form. It is best if the voids are located over a appreciable portion of the particles. A greater number of voids and a greater distribution of the voids throughout the particle will lead to improved physical bonding as well as a more geometrically stable bond between the silicone, gypsum, and host particle. The host particles should have desirable properties lacking in the gypsum, and, preferably, at least higher tensile and flexural strength. An example of such a well suited for the process and material described herein is a cellulosic fiber, particularly a lignocellulosic fiber, such as a wood fiber. Therefore, without intending to limit the material and/or particles that qualify as "host particles," wood fiber(s) is often used hereafter for convenience in place of the broader term.

The term "siloxane," as used herein, means a low molecular weight hydrogen modified siloxane, such as polymethylhydrogen siloxane, adapted to be polymerized into a silicone. The term "siloxane emulsion," as used herein, means an aqueous emulsion of one or more such siloxanes, which is stable in the gypsum or GWF slurry under the conditions which maintain calcium sulfate hemihydrate crystals therein.

The term "catalyst," as used herein, means a substance adapted to promote the cure of the siloxane to a silicone during the board drying step.

The term "Portland Cement" means a cement including tricalcium silicate (Ca₃SiO₅), dicalcium silicate (Ca₂SiO₄) or tricalcium aluminate (Ca₃Al₂O₆). Portland Cement has typical compositions as shown in the following table:

| **Chemical composition of Portland Cement, as a percentage by weight of the total composition** | | | | | | |
|---|---|---|---|---|---|---|
| | **SiO**_{**2**} | **Al**_{**2**}**O**_{**3**} | **Fe**_{**2**}**O**_{**3**} | **CaO** | **MgO** | **SO**_{**3**} |
| **Type I** | 20.9 | 5.2 | 2.3 | 64.0 | 2.8 | 2.9 |
| **Type II** | 21.7 | 4.7 | 3.6 | 63.6 | 2.9 | 2.4 |
| **Type III** | 21.3 | 5.1 | 2.3 | 64.9 | 3.0 | 3.1 |
| **Type IV** | 24.3 | 4.3 | 4.1 | 62.3 | 1.8 | 1.9 |
| **Type V** | 25.0 | 3.4 | 2.8 | 64.4 | 1.9 | 1.6 |

The basic GWF process begins by mixing uncalcined gypsum and host particles, e.g., wood or paper fibers, with water to form a dilute aqueous slurry. The source of the gypsum may be from raw ore or from the by-product of a flue-gas-desulpherization or phosphoric-acid process. The gypsum should be of a relatively high purity, i.e., preferably at least about 92-96%, and finely ground. Larger particles are acceptable, but may lengthen the conversion time. The gypsum can be introduced either as a dry powder or via an aqueous slurry.

The host particles are preferably cellulosic fibers which may come from waste paper, wood pulp, wood flakes, and/or another plant fiber source. A preferred mix is 25% paper fiber and 75% spruce fiber weight. A mix of 100% paper fiber may also be used. It is preferable that the fiber be of the kind that is porous, hollow, split and/or rough surface such that its physical geometry provides accessible intersticies or voids which accommodate the penetration of dissolved calcium sulfate. In any event, the source, for example wood pulp, may also require prior processing to break up clumps, separate oversized and undersized material, and, in some cases, pre-extract strength retarding materials and/or contaminants that could adversely affect the calcination of the gypsum; such as hemicelluloses, acetic acid, etc.

The ground gypsum and fibers are mixed in a ratio of 85% gypsum with sufficient water to make a slurry containing about 5-30% by weight solids, although slurries containing about 10-20% by weight solids are preferred. The solids in the slurry should comprise from about 0.5% to 30% by weight of wood fibers, preferably about 10% fibers, and the balance being mainly gypsum.

### Conversion to Hemihydrate

The slurry is fed into a pressure vessel equipped with a continuous stirring or mixing device. Crystal modifiers, such as organic acids, can be added to the slurry at this point, if desired, to stimulate or retard crystallization or to lower the calcining temperature. Steam is injected into the vessel to bring the interior temperature of the vessel up to between about 212° F. (100° C.) and about 350° F. (177°C.), and autogeneous pressure; the lower temperature being approximately the practical minimum at which the calcium sulfate dehydrate will calcine to the hemihydrate state within a reasonable time; and the higher temperature being about the maximum temperature for calcining hemihydrate without undue risk of causing some of the calcium sulfate hemihydrate to convert to anhydrite. The autoclave temperature is preferably on the order of about 285° F. (140° C.) to 305° F. (152° C.).

When the slurry is processed under these conditions for a sufficient period of time, for example on the order of 15 minutes, enough water is driven out of the calcium sulfate dihydrate crystals to convert it to the acicular hemihydrate crystals. The solution, aided by the continuous agitation to keep the particles in suspension, wets out and penetrates the open voids in the host fibers. As saturation of the solution is reached, the hemihydrate nucleates and begins forming crystals in, on, and around the voids and along the walls of the host fibers.

When the conversion is complete, the pressure on the autoclave is reduced, desired additives, such as the particular accelerator ZnSO₄ (zinc sulfate), or conventional additives including accelerators, retarders, preservatives, fire retardents and strength enhancing agents, the siloxane or siloxane emulsion, and the Portland Cement are introduced, typically at or just prior to the head box, and the slurry is discharged from the headbox onto a dewatering conveyor.

### The Siloxane

The siloxane is generally a fluid linear hydrogen-modified siloxane, but can also be a cyclic hydrogen-modified siloxane so long as the siloxane is capable of forming highly cross-linked silicone resins. Such siloxanes are well-known to those of ordinary skill in the art and are commercially available and described in the literature familiar to those in the art. Typically the linear hydrogen-modified siloxanes useful in the practice of the present invention comprise those of the general formula:

RHSiO_{2/2}

wherein R represents a saturated or unsaturated mono-valent hydrocarbon radical. In the preferred embodiments, R represents an alkyl group and most preferably R is methyl.

In the preferred embodiment of this invention, the siloxane fluid is a hydrogen methyl siloxane fluid such as that manufactured by Dow Corning under the designation/code 1107, which has the general formula:

(OSiMeH)_{*n*}

wherein n≅50 and the polymer is SiMe₃ end blocked, according to Dow Corning's product literature.

The siloxane, whether emulsified or not, is preferably added to the slurry after it has been released from the autoclave, preferably immediately prior to the head box, in order to provide sufficient time for the siloxane to thoroughly mix with the slurry prior to the formation of the filter cake and the dewatering step of the process. When an emulsifier is not used, the slurry containing the siloxane must be agitated sufficiently to keep the siloxane in the form of fine droplets. The siloxane must be stable at the temperature of the slurry at the time the siloxane is mixed with the gypsum wood-fiber slurry and the siloxane must remain stable in the presence of the additives, such as accelerators, that are present in the slurry. The siloxane emulsion must remain stable through the dewatering and board formation steps as well. Most importantly, a high proportion of the siloxane should be retained in the filter cake during the dewatering process. With such high retention, a noticeable increase in water resistance is imparted when the quantity of the siloxane emulsion added to the slurry is sufficient to provide at least about 0.1% by weight of siloxane based on the weight of the total solids in the slurry. It is preferred to use from about 1% to about 2% by weight of siloxane to achieve a high level of water resistance.

The water resistance of the board is measured by cutting a 5" x 5" sample of the finished product and conditioning it in a room at 70°F and 50% relative humidity for 24 hours. The sample is then weighed. The sample is then exposed to moisture by immersing the sample 1 inch below the surface of a body of 70°F water for 2 hours. The sample is then removed and any water on its surface is removed with a towel. The sample is weighed again to determine the amount of water absorbed by the sample. Water absorption is defined as the weigh gain divided by the sample dry weight. Water absorption below 10% is acceptable, but below 5% is preferred.

### The Catalyst

The Portland Cement is preferably added to the slurry contemporaneously with the siloxane or siloxane emulsion prior to the head box, in order to provide sufficient time for the siloxane and the Portland Cement to throughly mix with the slurry prior to the formation of the filter cake and the dewatering step of the process. The Portland Cement may be any of the standard types used in the industry, but it is preferred to use Type I. The Portland Cement is prepared by adding water to form a 3% to 5% slurry by weight. This Portland Cement slurry is then added to the gypsum wood-fiber slurry such that the Portland Cement is in a range of .3% to 2% by weight based upon total solids in the gypsum wood-fiber slurry.

The Portland Cement also acts to retard the rehydration of the gypsum. However, the retarding effect can be compensated by the addition of zinc sulfate along with potassium sulfate as rehydration accelerators. Dosages of zinc sulfate and potassium sulfate are in ranges of 0.5% to 2 %, based on the weight of gypsum in the slurry, with a dosage of 1% preferred.

### The Emulsifier

The preferred emulsifier is a fatty acid quaternary amine cationic emulsifier sold by UNIQEMA, ICI Americas, Inc. of Wilmington, Delaware, under the designation/code G-265. It has a hydrophobic/lipophobic balance (EB) value of approximately 33.

The G-265 emulsifier contains approximately 0.9% by weight of primary amine, according to its manufacturer. In order to complex (tie-up) this residual primary amine contaminant, a small amount of aluminum sulfate, i.e., alum, a strong Lewis acid is added to the G-265 emulsifier. In the preferred practice of this invention, 1.0 grams of the alum solution is added for every 5 grams of G-265 emulsifier. The addition of the alum introduces Al⁺³ ions that complex with any residual primary amine. Using this mechanism, the primary amine is no longer available to prematurely catalyze the siloxane polymerization reaction. This imparts a greater degree of stability to the siloxane emulsion.

In the case of a nonionic emulsifier, the HLB value of the emulsifier is related directly with the thermal stability of the resultant emulsion. It is preferred that the emulsifier have a high HLB number, preferably at least 20.0 or higher. The preferred nonionic emulsifier is polyvinyl alcohol such as Airvol 321 from Air Products. The HLB number of this emulsifier is 20.

The following examples will serve to illustrate the preparation of useful siloxane emulsions that can be employed in accordance with the method disclosed in the present invention to impart improved water resistance onto GWF boards, but it is understood that these examples are set forth for illustrative purposes and that many other gypsum or gypsum wood fiber products having improved water resistance may be made using suitable variations.

### Emulsion Example 1

The following siloxane emulsion containing 50% by weight of siloxane is prepared using Dow Corning 1107 (described above), emulsified with ICI G-265 (described above).

| | |
|---|---|
| Water | 49.25 wt.% |
| Dow Coming 1107 Siloxane Oil | 50.00 wt.% |
| G-265 (100% active) | 0.75 wt.% |

The emulsion is prepared by combining the G-265 and the water in a suitable container. The G-265 and water are mixed for approximately 10 minutes to dissolve the G-265. The mixture is then added to the Dow Corning Siloxane Oil and further mixed to emulsify the siloxane.

### Emulsion Example 2

The following siloxane emulsion containing 50 % by weight of siloxane can be prepared using Dow Coming 1107 (described above), emulsified PVA.

| | |
|---|---|
| Water | 49.20 wt.% |
| Dow Corning 1107 Siloxane Oil | 50.00 wt.% |
| Polyvinylalcohol | 0.80 wt.% |

The emulsion is prepared by combining the Dow Corning Siloxane Oil, the polyvinylalcohol, and the water in a suitable container with physical agitation sufficient to emulsify the siloxane.

### Dewatering

The hot siloxane-containing slurry is passed through the head box which distributes the slurry onto a flat porous forming surface to produce a filter cake. The formation of the filter cake and the dewatering of the filter cake is preferably carried out using equipment of the type described in U.S. Patent No. 5,320,677, which is made a part of this disclosure. The filter cake is dewatered by the evaporation of water when the slurry is released from the autoclave and by the water in the slurry being drawn through the porous forming surface, preferably aided by a vacuum applied to the underside of the porous forming surface. Although the dewatering causes cooling of the filter cake, as much of the water is removed as possible while the temperature of the product slurry is still relatively high and before the hemihydrate is converted into gypsum. As much as 90% of the slurry water is removed in the dewatering step, leaving a filter cake of approximately 35% water by weight. At this stage the filter cake consists of wood fibers interlocked with rehydratable calcium sulfate hemihydrate crystals and can still be broken up into individual composite fibers or nodules, shaped, cast or compacted to a higher density. While this is taking place, it is believed the siloxane starts to polymerize around and attaching to the particles present.

### Pressing and Rehydration

The dewatered filter cake is wet-pressed for a few minutes to further reduce the water content and to compact the filter cake into the desired shape, thickness and/or density. Although the extraction of the bulk of the water in the dewatering step will contribute significantly to lowering the filter cake temperature, additional external cooling may be required to reach the desired level within a reasonable time. The temperature of the filter cake is preferably reduced to below about 120° F. (49° C.), so that relatively rapid rehydration can take place. The rehydration recrystallizes the alpha hemihydrate crystals into acicular gypsum crystals in place, physically interlocked with the wood fibers.

Depending on the accelerators, retarders, crystal modifiers or other additives provided in the slurry, hydration may take from only a few minutes to an hour or more. Because of the interlocking of the acicular hemihydrate crystals with the wood-fibers, and the removal of most of the carrier liquid from the filter cake, migration of the calcium sulfate is averted, leaving a homogeneous composite. The rehydration effects a recrystallization of the hemihydrate crystals to dihydrate crystals in-situ, i:e., within and about the voids of the wood fibers, thereby preserving the homogeneity of the composite. The crystal growth also connects the calcium sulfate crystals on adjacent fibers to form an overall crystalline mass, enhanced in strength by the reinforcement of the wood fibers.

When the hydration is complete, it is desirable to promptly dry the composite mass to remove the remaining free water. Otherwise, the hygroscopic wood fibers tend to hold, or even absorb, uncombined water which will later evaporate. If the calcium sulfate coating is fully set before the extra water is driven off, the fibers may shrink and pull away from the gypsum when the uncombined water does evaporate. Therefore, for optimum results it is preferable to remove as much excess free water from the composite mass as possible before the temperature drops below the level at which hydration begins.

### Drying

The pressed board, which typically contains about 30% by weight of free water, is then promptly dried at a relatively high temperature in order to reduce the free water content to about 0.5% or less in the final product. During the drying step it is important to raise the internal temperature of the final product high enough, for a short period of time, to promote the polymerization of the siloxane to a silicone. Drying conditions which tend to calcine the gypsum should be avoided. It has been found that it is desirable to carry out the drying under conditions in which the product achieves a core temperature in the range of at least 170° F. (77° C.) and no greater than 200° F. (93° C.). Temperatures above 200°F exceed the calcining temperature and are detrimental to the finished product.

The drying is typically done in a multi stage kiln. Higher air humidity and a relatively low drying rate in the first several stages of the kiln are preferred, because this will help the cross-linking reaction of siloxane. It is preferred that the product keep a moisture content greater than 10% for as long as possible, thereby providing the necessary water to allow the siloxane to cure to silicone. The set and dried board can be cut and otherwise finished to desired specification. When finally set, the unique composite material exhibits desired properties contributed by all of its components. The wood fibers increase the strength, particularly flexural strength, of the gypsum matrix, while the gypsum acts as a coating and binder to protect the wood fiber, impart fire resistance and decrease expansion due to moisture. The silicone imparts water resistance to the material.

### Results

The following table summarizes the water resistance expressed in terms of the water absorption (WA) achieved in the GWF products using various mixtures of components. Each example in the table includes 200g of water, 3.2 g of paper fiber, and 31.8g of alpha hemihydrate.

| | **HRA (g)** | **potash (g)** | **ZnSO4 (g)** | **cement (g)** | **DC-1107 (g)** | **WA (%)** |
|---|---|---|---|---|---|---|
| **1** | 0.16 | 0.32 | 0.32 | 0.75 | 0.32, oil only | 2.73 |
| **2** | 0.16 | 0.32 | 0.32 | 0.75 | 0.16, oil only | 3.75 |
| **3** | 0.16 | 0.32 | 0.48 | 0.75 | 0.16, oil only | 6.86 |
| **4** | 0.16 | 0.48 | 0.32 | 0.75 | 0.16, oil only | 3.31 |
| **5** | 0.16 | 0.32 | 0.32 | 0.75 | 0.1, oil only | 14.14 |
| **6** | 0.16 | 0.32 | 0.48 | 0.75 | 0.1, oil only | 8.92 |
| **7** | 0.16 | 0.48 | 0.32 | 0.75 | 0.1, oil only | 3.20 |
| **8** | 0.16 | 0.32 | 0.32 | 0.75 | 0.1, in emulsion | 2.62 |
| **9** | 0.16 | 0.32 | 0.48 | 0.75 | 0.1, in emulsion | 2.66 |
| **10** | 0.16 | 0.48 | 0.32 | 0.75 | 0.1, in emulsion | 2.34 |
| | | | | | | |

The emulsions used in cases 8 - 10 were as described in Example 2. The amount listed in the table is the amount of the siloxane, in the emulsion.

### Water Resistant Gypsum Product

A product containing only gypsum and not host particles can also be prepared. In the preferred embodiment of such a product, a dry mixture is prepared by combining 500g of calcined gypsum with 2.5g HRA, 0.63g postash, .63g ZnS04, and 1.5g Portland Cement.

A diluted siloxane emulsion is prepared by adding the DC-1107 emulsion described in Example 2 above to 281.5g of water. Separately, a foam is prepared by combining 10cc of a foaming agent solution and 200g of water. The foam mixture is then vigorously agitated by mechanical stirring to generate the foam. The dry mixture, diluted siloxane emulsion, and foam are then mixed. The resulting mixture is then cast into the desired shape of product.

The product is then dried at 350° F until the product is reduced in weight to 75% of its weight prior to drying. The product is then dried at 110° F until a constant weight is achieved, which occurs when most of the water is removed.

If the amount of siloxane is varied, different water absorption is achieved. The following table summarizes those results.

| | **DC-1107 emulsion (50%) g** | **W.A. %** | **Set time min** |
|---|---|---|---|
| 1a | 10 | 6.87 | 6 |
| 1b | | 6.28 | |
| 1c | | 6.86 | |
| | | Average 6.67 | |
| 2a | 5 | 29.04 | 7 |
| 2b | | 31.16 | |
| 2c | | 33.35 | |
| | | Average 31.18 | |
| 3a | 3 | 21.33 | 6.15 |
| 3b | | 20.50 | |
| 3c | | 20.70 | |
| | | Average 20.84 | |

The embodiments and forms of invention shown and described herein are to be considered only as illustrative. It will be apparent to those skilled in the art that numerous modifications may be made therein without departing from the spirit of the invention and the scope of the appended claims.

## Claims

1. A process for making a gypsum containing board product having improved water resistance which comprises:
adding an aqueous siloxane emulsion and Portland Cement to an aqueous slurry of a calcium sulfate hemihydrate material and host particles, while said slurry is at a temperature above rehydration temperature, said siloxane emulsion and Portland Cement being stable under conditions in which calcium sulfate hemihydrate crystals are formed;
passing said siloxane-containing slurry onto a forming surface to form a filter cake before the temperature of said filter cake falls below the temperature at which the calcium sulfate hemihydrate rehydrates to calcium sulfate dihydrate;
removing a substantial portion of the water from said filter cake through said porous surface and cooling said filter cake to a temperature at which rehydration begins;
pressing said filter cake to form a board and remove additional water whereby calcium sulfate hemihydrate crystals about said host particles rehydrate in situ to calcium sulfate dihydrate crystals; and
drying said board to remove the remaining free water and to cause the core of said board to reach a temperature sufficient to cure said siloxane to form polymerized silicone.

2. The process as described in claim 1, wherein the Portland Cement is present in the slurry in an amount from 0.3% to 2% by weight of the total solids in the slurry.

3. A process for making a GWF board having improved water resistance, comprising:
mixing ground gypsum and host particles together with sufficient water to form a slurry, said host particles each having voids, said slurry being sufficiently dilute to substantially wet out the voids in the host particles;
heating the slurry in a pressure vessel, with continuous agitation, to a temperature sufficient to calcine the gypsum to calcium sulfate α-hemiyhdrate;
maintaining the slurry at such temperature until at least some calcium sulfate hemihydrate has crystallized in and about the voids in the host particles;
adding a siloxane emulsion and Portland Cement to said slurry while said slurry is at a temperature at which the calcium sulfate hemihydrate crystals are maintained, said siloxane emulsion being stable under the conditions in which the calcium sulfate hemihydrate crystals are formed;
passing said siloxane-containing slurry onto a forming surface to form a filter cake before the temperature of said filter cake reaches the temperature at which the calcium sulfate hemihydrate crystals rehydrate to dihydrate crystals;
cooling said filter cake to reach a temperature at which rehydration occurs;
pressing said filter cake to form a board and to remove additional water there from whereby said calcium sulfate hemihydrate crystals in and about the voids in the host particles rehydrate to form calcium sulfate dihydrate crystals; and
drying the board to remove the remaining free water from said board and cure said siloxane.

4. The process described in claim 3, wherein the step of drying the board includes a multistage kiln wherein at least a first stage of the kiln maintains a high humidity and low drying rate.

5. The process described in claim 3 or 4, wherein the board is dried at a rate such that the board has a moisture content of at least 10% until the siloxane has polymerized into silicone.

6. The process described in anyone of claims 3 to 5, wherein the board is dried under conditions in which the board achieves a core temperature of at least 170°F but not exceeding 200°F.

7. The process as described in anyone of claims 1 to 6, wherein said siloxane emulsion comprises hydrogen methyl siloxane.

8. The process as described in anyone of claims 1 to 7, wherein said siloxane emulsion comprises a cationic emulsifier.

9. The process as described in claim 8, wherein said siloxane emulsion comprises a quaternary amine emulsifier.

10. The process as described in claim 9, wherein Al⁺³ ions are added to the quaternary amine emulsifier.

11. The process as described in anyone of claims 1 to 7, wherein said siloxane emulsion comprises a nonionic emulsifier.

12. The process as described in claim 11, wherein said siloxane emulsion comprises an emulsifier having a hydrophobic/lipophobic balance number in excess of about 20.

13. The process as described in anyone of claims 1 to 12, wherein the quantity of siloxane emulsion added to said slurry is sufficient to provide at least about 0.1% by weight of siloxane to said slurry, based on the weight of the total solids in said slurry.

14. The process as described in claim 13, wherein the quantity of siloxane emulsion added to said slurry is sufficient to provide from about 1% to about 2% by weight of siloxane to said slurry, based on the weight of the total solids in said slurry.

15. The process as described in anyone of claims 1 to 14, wherein the Portland Cement includes at least one of the compounds selected from the group consisting of: tricalcium silicate (Ca₃SiO₅), dicalcium silicate (Ca₂SiO₄), and tricalcium aluminate (Ca₃Al₂O₆).

16. The process as described in anyone of claims 1 to 15, including the step of adding an accelerator to the aqueous slurry.

17. The process as described in claim 16, wherein the accelerator includes at least one of the compounds selected from the group consisting of: potassium sulfate and zinc sulfate.

18. The process as described in claim 17, wherein the accelerator is present in a quantity from 0.5% to 2% of the weight of the calcium sulfate hemihydrate present in the slurry.

19. The process as described in anyone of claims 1 to 18, wherein the dilute slurry comprises calcium sulfate material and discrete ligno-cellulosic host particles having voids over a substantial portion of their bodies, said slurry being sufficiently dilute to substantially wet out the penetrable voids in the host particles.

20. The process as described in claim 19, wherein the host particles are paper fibers or are wood fibers selected from the group consisting of chemically refined wood pulp, mechanically refined wood pulp, thermomechanically refined wood pulp and combinations of the foregoing.

21. The process as described in claim 19 or 20, wherein the solids in the slurry comprise about 0.5-30% wood fibers by weight of the total solids in the slurry.

22. The process as described in claim 21, wherein the solids in the slurry comprise between about 3-20% wood fibers by weight of the total solids in the slurry.

23. A process for making a water resistant gypsum product comprising:
mixing siloxane, Portland Cement and an aqueous slurry of calcium sulfate hemihydrate;
forming said siloxane containing slurry into a desired shape of material;
rehydrating the calcium sulfate hemihydrate to calcium sulfate dihydrate; and
drying said shape of material to remove remaining free water and causing the shape of material to reach a temperature sufficient to cure said siloxane to form polymerized silicone.

24. The process as described in claim 23, wherein the siloxane is hydrogen methyl siloxane.

25. The process as described in claim 23 or 24, wherein the siloxane has the general formula (OSiMeH)ₙ wherein n averages 50.

26. The process described in anyone of claims 23 to 25, wherein the quantity of siloxane is sufficient to provide at least 0.1% of polymerical siloxane by weight based on the total weight of the dry shape of material.

27. The process as described in anyone of claims 1 to 26, wherein the Portland Cement is Type I Portland Cement.

28. A product made by the process of anyone of claims 23 to 27.

29. A product of claim 28 wherein the water absorption of the product is less than 30%, preferably less than 5%.

30. A process for making a water resistant gypsum product comprising the steps of:
mixing siloxane, a catalyst, and an aqueous slurry containing calcium sulfate hemihydrate, said mixing taking place with sufficient agitation to uniformly disperse the siloxane in the slurry;
forming said slurry into a desired shape;
rehydrating the calcium sulfate hemihydrate to calcium sulfate dihydrate; and
drying said shape of material to remove the remaining free water and allow the shape of material to reach a temperature sufficient to cure said siloxane to form polymerized silicone.

31. A process for making a gypsum containing board product having improved water resistance which comprises:
adding siloxane and a catalyst to an aqueous slurry of a calcium sulfate hemihydrate material and host particles, while said slurry is at a temperature above rehydration temperature, said siloxane and catalyst being stable under conditions in which calcium sulfate hemihydrate crystals are formed, said addition occurring with sufficient agitation to evenly distribute said siloxane throughout the slurry;
passing said siloxane-containing slurry onto a forming surface to form a filter cake before the temperature of said filter cake falls below the temperature at which the calcium sulfate hemihydrate rehydrates to calcium sulfate dihydrate;
removing a substantial portion of the water from said filter cake through said porous surface and cooling said filter cake to a temperature at which rehydration begins;
pressing said filter cake to form a board and remove additional water whereby calcium sulfate hemihydrate crystals about said host particles rehydrate in situ to calcium sulfate dihydrate crystals; and
drying said board to remove the remaining free water and to cause the core of said board to reach a temperature sufficient to cure said siloxane to form polymerized silicone.

32. The process as described in claim 30 or 31, wherein the catalyst includes at least one of the compounds selected from the group consisting of: aliphatic diamine, tricalcium silicate (Ca₃SiO₅), dicalcium silicate (Ca₂SiO₄), and tricalcium aluminate (Ca₃Al₂O₆).

33. The process as described in claim 30 or 31, wherein the catalyst is Type I Portland Cement.

34. The process as described in anyone of claims 30 to 33, including the step of adding an accelerator to the aqueous slurry.

35. The process as described in claim 34, wherein the accelerator includes at least one of the compounds selected from the group consisting of: potassium sulfate and zinc sulfate.

36. A product made by the process of anyone of claims 31 to 35.

37. The product of claim 36, wherein the water absorption of the product is less than 30%.
